Europäisches Patentamt

European Patent Office

Office européen des brevets

(19)

(11) Veröffentlichungsnummer : **0 188 777
B1**

(12)                         EUROPÄISCHE PATENTSCHRIFT

(45) Veröffentlichungstag der Patentschrift :
15.03.89

(51) Int. Cl.⁴ : **H 02 G 15/013, H 02 G 15/18**

(21) Anmeldenummer : **85116244.6**

(22) Anmeldetag : **19.12.85**

(54) **Kabelmuffe mit einer querschnittlich kreuzförmigen Vorrichtung zum Stützen von in Kabelmuffen einlaufenden Kabelenden.**

(30) Priorität : 16.01.85 DE 3501243
14.06.85 DE 3521366

(43) Veröffentlichungstag der Anmeldung :
30.07.86 Patentblatt 86/31

(45) Bekanntmachung des Hinweises auf die Patenterteilung : 15.03.89 Patentblatt 89/11

(84) Benannte Vertragsstaaten :
BE DE FR GB IT NL SE

(56) Entgegenhaltungen :
EP–A– 0 086 110
EP–A– 0 120 437
EP–A– 0 120 603
EP–A– 0 133 371
DE–A– 2 539 275
DE–A– 2 758 094
FR–A– 2 284 201
GB–A– 1 604 986

(73) Patentinhaber : Walter Rose GmbH & Co. KG
Postfach 29 28
D-5800 Hagen 1 (DE)

(72) Erfinder : Grzanna, Ortwin
Geibelstrasse 16
D-4330 Mülheim (DE)
Erfinder : Fremgen, Dieter, Dipl.-Ing.
Hans-Böckler-Strasse 46
D-5603 Wülfrath (DE)
Erfinder : Koesfeld, Manfred
Beethoven Strasse 2
D-5802 Wetter 2 (DE)
Erfinder : Kastrop, Dieter
Ringstrasse 48
D-5804 Herdecke (DE)
Erfinder : Weber, Rolf-Udo
Columbusstrasse 19
D-4330 Muelheim (DE)
Erfinder : Steuer, Aloysius
Steeler Strasse 333
D-4300 Essen (DE)
Erfinder : Romswinkel, Horst
Josef Strasse 3
D-4650 Gelsenkirchen (DE)

(74) Vertreter : Patentanwälte Meinke und Dabringhaus
Dipl.-Ing. J. Meinke Dipl.-Ing. W. Dabringhaus
Westenhellweg 67
D-4600 Dortmund 1 (DE)

## Beschreibung

Die Erfindung richtet sich auf eine Kabelmuffe mit einem Hüllschlauch aus wärmeschrumpffähigem Material, dessen Innenfläche in Bereichen, in welchen eine Längsabdichtung der Muffe vorgesehen ist, mit einer durch Wärmewirkung schmelzbaren Beschichtung versehen ist, und mit mindestens einem koaxial im Hüllschlauch in den Bereichen mit der schmelzbaren Beschichtung angeordneten Formstück beispielsweisen kreisförmigen Querschnitts, welches von einem Mittelteil ausgehende und sich radial etwa bis zum Außenumfang eines in die Muffe einführbaren Kabelendenbündels erstreckende Stege aufweist, welche benachbarte Kabelenden voneinander trennen.

Eine gattungsgemäße Kabelmuffe ist aus der DE-A-2539 275 bekannt. Diese Kabelmuffe weist einen Hüllschlauch aus einem wärmeschrumpfenden Material auf, an dessen Innenseite im Bereich der Enden ringförmige, durch Wärmewirkung schmelzbare Einsätze aus einem Polymermaterial vorgesehen sind. Innerhalb des Hüllschlauches ist ein im Querschnitt kreuzförmiges Formstück als Raumteiler aus einem nicht schmelzbaren Material angeordnet. Dieses Formstück dient dazu, einlaufende Kabel geringeren Querschnittes als die Kabelmuffe selbst im Einlaufbereich in ihrer Lage zu fixieren und dort nach Aufschrumpfen des Hüllschlauches zu halten.

Bei der bekannten Lösung erfolgt die Abdichtung der Kabelmuffe nur über die durch Wärmewirkung schmelzbaren Einsätze, das Formstück dient dagegen nicht zur Abdichtung, sondern nur zur Abstützung. Eine vollständige Abdichtung über diese ringförmigen Einsätze ist aber nur dann gewährleistet, wenn Kabel von sehr geringem Durchmesser verwendet werden. Bei größeren Kabeln besteht dagegen die Gefahr, daß der Wärmetransport zu dem Raum zwischen den Kabeln nicht mehr ausreichend groß ist, so daß die schmelzbare Beschichtung nicht vollständig in den Raum zwischen den Kabeln gelangen kann und somit keine ausreichende Abdichtung gewährleistet ist.

Eine andere Ausführungsform einer Kabelmuffe ist aus der EP-A-0 086 110 bekannt. Diese Kabelmuffe weist innerhalb eines Hüllschlauches einen Ring aus einem wärmeschrumpffähigem Material auf. Dieser Ring ist allerdings nicht als Stütze für eingeleitete Kabelenden geeignet. Außerdem ist bei Kabeln größerer Durchmesser nicht gewährleistet, daß der Raum zwischen den Kabeln, insbesondere wenn mehr als zwei Kabel einzuführen sind, vollständig mit Dichtungsmaterial ausgefüllt ist, so daß keine einwandfreie Abdichtung gewährleistet ist.

Eine weitere Ausführungsform einer Kabelmuffe ist in der EP-A-0 133 371 beschrieben, deren Inhalt gemäß A.54(3) EPÜ zum Stand der Technik zählt. Diese Kabelmuffe weist innerhalb eines Hüllschlauches aus einem wärmeschrumpffähigen Material zur Abdichtung dienende, schmelzbare Formstücke sowie ein zusätzliches nicht schmelzbares Teil zur Abstützung und Verbindung der eingeführten Kabel auf.

Demgegenüber besteht die Aufgabe der Erfindung darin, eine Kabelmuffe zu schaffen, welche unabhängig von der Art der eingesetzten Kabel vollständig dicht ist und welche auf möglichst einfache Weise handhabbar ist.

Bei einer Vorrichtung der eingangs bezeichneten Art wird diese Aufgabe gemäß der Erfindung dadurch gelöst, daß die durch Wärmewirkung schmelzbare Beschichtung des Hüllschlauches und das Formstück aus Heißschmelzkleber gebildet sind, wobei der Erweichungspunkt des Heißschmelzklebers des Formstückes unter demjenigen der Heißschmelzkleberbeschichtung des Hüllschlauches liegt.

Durch das aus Heißschmelzkleber bestehende raumtrennende Formstück ist sichergestellt, daß unabhängig vom Durchmesser der Kabel eine vollständige Abdichtung auch im Raum zwischen den Kabeln stattfindet, da das schmelzende Formstück sich schon vor dem Schmelzvorgang im Raum zwischen den Kabeln befindet und dadurch während des Schmelzens diesen Raum vollständig ausfüllt. Es sind deshalb keine weiteren Einsätze zur Abdichtung notwendig, wodurch die Herstellung und Montage wesentlich vereinfacht wird. Die vollständige Abdichtung der Kabelmuffe wird durch den Unterschied der beiden Erweichungspunkte der einzusetzenden Materialien noch verbessert, da bereits vor dem Schrumpfbeginn des Hüllschlauches die Aufweichung und Auflösung des Formstückes beginnt, so daß angepaßt an den jeweiligen Muffenquerschnitt der Heißschmelzkleber des Formstückes jederzeit den gesamten abzudichtenden Raum innerhalb der Kabelmuffe ausfüllt.

Zur Lösung der Aufgabe sieht die Erfindung auch die im Anspruch 7 wiedergegebenen Verfahrensschritte vor. Diese Verfahrensweise ist für den Benutzer sehr einfach, sie ist störungsfrei und bietet eine große Sicherheit an späterer, besonders guter Abdichtung einer so gestalteten Kabelmuffe.

Eine Ausgestaltung der Vorrichtung nach der Erfindung besteht darin, daß sie in ihrem Inneren im Abstand vom ersten Formstück wenigstens ein weiteres Formstück derselben Ausbildung aufweist, wobei insbesondere vorgesehen ist, daß der Abstand zwischen den beiden Formstücken kleiner als das 1-fache, insbesondere kleiner als das 0,5-fache, der Formstücklänge ist.

Diese Gestaltung kann insbesondere dann vorgesehen sein, wenn die Hohlräume zwischen den eingelegten Kabeln vergleichsweise groß bzw. geometrisch unterschiedlich sind, was insbesondere bei Kabeln unterschiedlicher Durchmesser vorkommen kann. Für diesen Fall kann das Vorsehen von wenigstens zwei derartiger Formstücke in Abstand voneinander dafür Sorge tragen, daß an einer Stelle der Kabelmuffe ausreichend Heißschmelzkleber zur Verfügung steht, um die Hohlräume zwischen den Kabelmänteln auszufüllen, um so im Eingangsbereich einen vollständig dichten Abschluß zu gewährleisten.

Um die Montage zu optimieren, sieht die Erfindung in weiterer Ausgestaltung vor, daß vor Aufschrumpfen des Hüllschlauches und nach Einsetzen wenigstens zweier Formstücke die Kabelenden mit einem Band aus Heißschmelzkleber umwickelt sind, wobei der Erweichungspunkt dieses Heißschmelzklebers unter demjenigen des Heißschmelzklebers liegt, aus dem die Formstücke gebildet sind.

Mit dieser Weiterbildung der Erfindung wird erreicht, daß die Heißschmelzkleberinnenbeschichtung des Hüllschlauches bzw. der Schrumpfmanschette um die Menge geringer ausgeführt werden kann, die durch das aufgewickelte Band im Bereich der Formstücke zur Verfügung gestellt wird, d. h. die bereits bekannte Standardinnenbeschichtung mit Schmelzkleber muß auch bei Kabelmuffen nicht erhöht werden, in die einseitig oder beidseitig eine Mehrzahl von Kabelenden eingeführt werden.

In Ausgestaltung sieht die Erfindung darüber hinaus vor, daß ein Mittelbereich des Hüllschlauches von einer Heißschmelzkleberbeschichtung freigehalten ist.

Es hat sich gezeigt, daß bei gänzlich mit Heißschmelzkleber-innenbeschichteten Hüllschläuchen der beim Schrumpfen flüssig werdende Heißschmelzkleber eine genaue Lagefixierung des Schrumpf- bzw. Hüllschlauches nicht gewährleistet, es kann zu Auswanderungen kommen, womit nicht nur die Montage erschwert, sondern auch die Abdichtung nicht mit letzter Sicherheit gewährleistet ist.

Durch die erfindungsgemäße Ausgestaltung läßt sich der Hüll- bzw. Schrumpfschlauch zunächst zur Lagefixierung auf die Oberfläche des Kabelspleißes aufschrumpfen und setzt sich dort in Ermangelung eines Heißschmelzklebers fest, so daß seine Lage auch bei der weiteren nachfolgenden Wärmebehandlung fixiert bleibt.

Im praktischen Anwendungsfall bei Standard-Muffen kann der Abstand zwischen zwei Formstücken kleiner als 10 mm gehalten werden. Mit dieser Anordnung wird erreicht, daß die Formstücke aus Heißschmelzkleber bei der Montage selbst nicht insgesamt erschmolzen werden müssen. Sie können in ihren Kernbereichen durch ihre dichte Folge im Einlaufbereich der Kabelenden auch fest bleiben, ohne daß damit die Gefahr verbunden wäre, Undichtigkeiten in Kauf nehmen zu müssen.

Um die Montage zu erleichtern, sieht die Erfindung auch vor, daß die Formstücke an ihren freien Enden der Stege zur Bildung einer Auflagefläche für das Kleberband sich erweiternd ausgebildet sind.

In Ausgestaltung der Verfahrensweise sieht die Erfindung die im Anspruch 8 wiedergegebenen Verfahrensschritte vor, aus denen sich eine Vereinfachung der Montageweise ergibt, mit den bereits oben genannten Vorteilen.

Die Erfindung ist nachstehend anhand der Zeichnungen beispielsweise näher erläutert. Diese zeigt in :

Fig. 1 die perspektivische Explosionsdarstellung einer Kabelmuffe nach der Erfindung,

Fig. 2 die gleiche Darstellung einer Kabelmuffe in einem abgewandelten Ausführungsbeispiel,

Fig. 3 den Endzustand nach Aufschrumpfen des Kabelmantels nach Fig. 1 bzw. Fig. 2,

Fig. 4 die perspektivische Darstellung einer Kabelmuffe in abgeänderter Gestaltung teilweise geschnitten und in

Fig. 5 eine vergrößerte Schnittdarstellung des Einlaufbereiches von vier Kabelenden.

Eine in den Figuren allgemein mit 1 bezeichnete Kabelmuffe wird von einem Hüllschlauch 2 aus schrumpffähigem Material gebildet, der beispielsweise mit einem einzelnen Kabelausgang 3 versehen sein kann. Im übrigen ist die Kabelmuffe von üblicher Bauweise, so daß hier auf die Wiedergabe weiterer Einzelheiten verzichtet wurde.

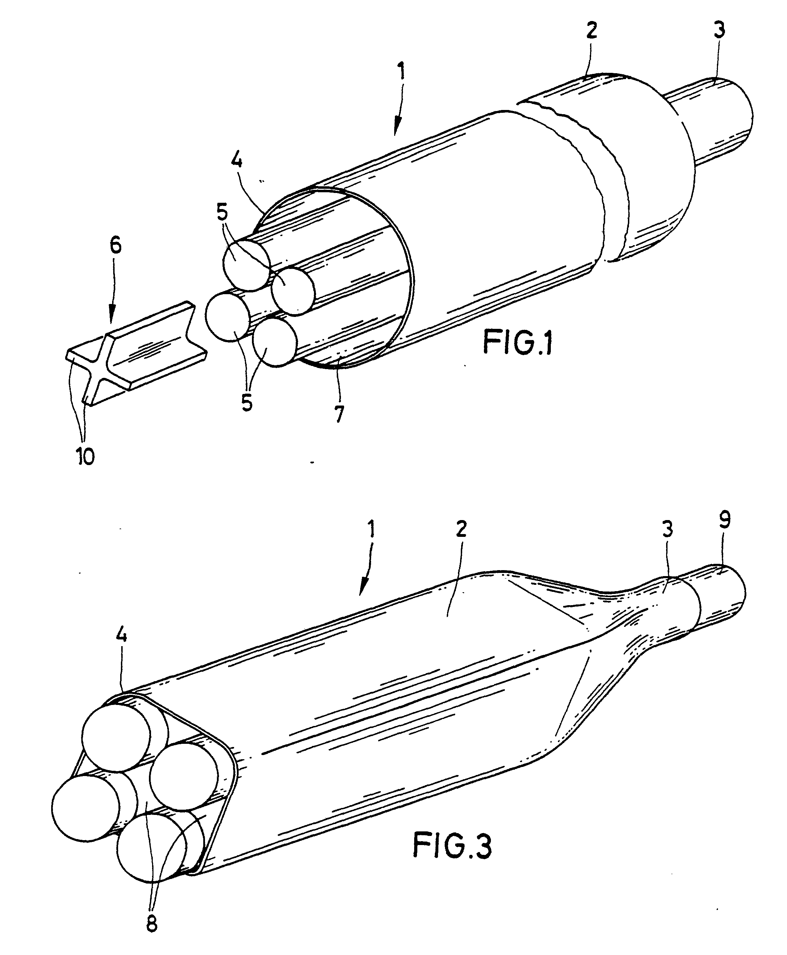

In das dem Kabelausgang 3 entgegengesetzte Ende 4 der Kabelmuffe 1 sind im dargestellten Beispiel vier Kabelenden 5 eingeführt, die im Inneren verspleißt sind. Vor diesen Kabelenden 5 ist in Fig. 1 ein im Querschnitt Kreuzförmiges Formstück 6 dargestellt, das ausschließlich aus einem Heißschmelzkleber besteht. Der Hüllschlauch 2 ist auf seiner Innenseite mit einer Heißschmelzkleberbeschichtung 7 versehen.

Wesentlich für die Erfindung ist, daß der Erweichungspunkt der Heißschmelzkleberbeschichtung 7 höher liegt, als derjenige des Heißschmelzklebers, aus dem das Formstück 6 gebildet ist.

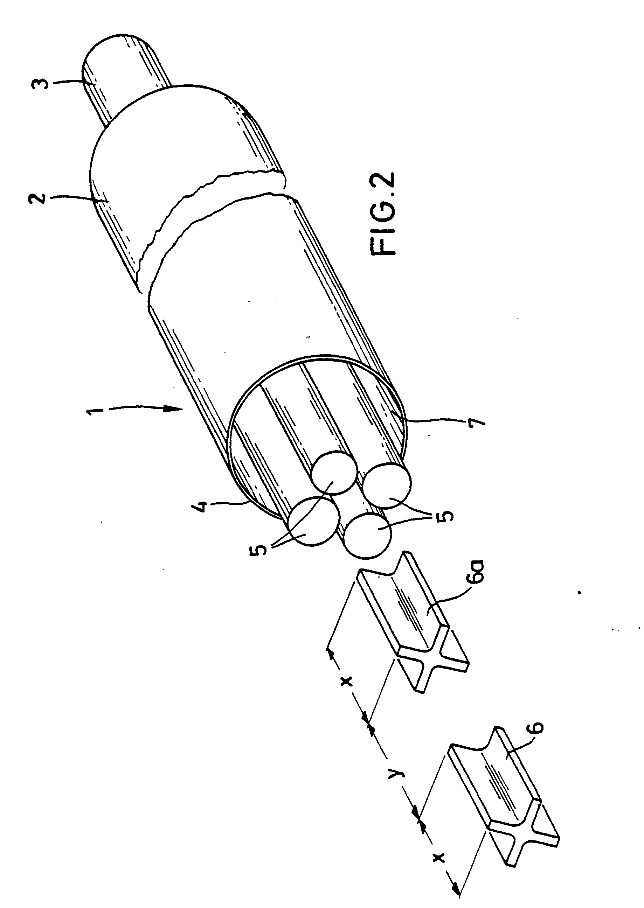

In Fig. 2 sind zwei Formstücke 6 und 6a dargestellt, die eine Länge « x » aufweisen und in der Kabelmuffe 1 in einem Abstand « y » einbaubar sind. Dieser Abstand « y » der Formstücke 6 bzw. 6a zueinander soll das 0,5 bis 2-fache der Formstücklänge « x » betragen.

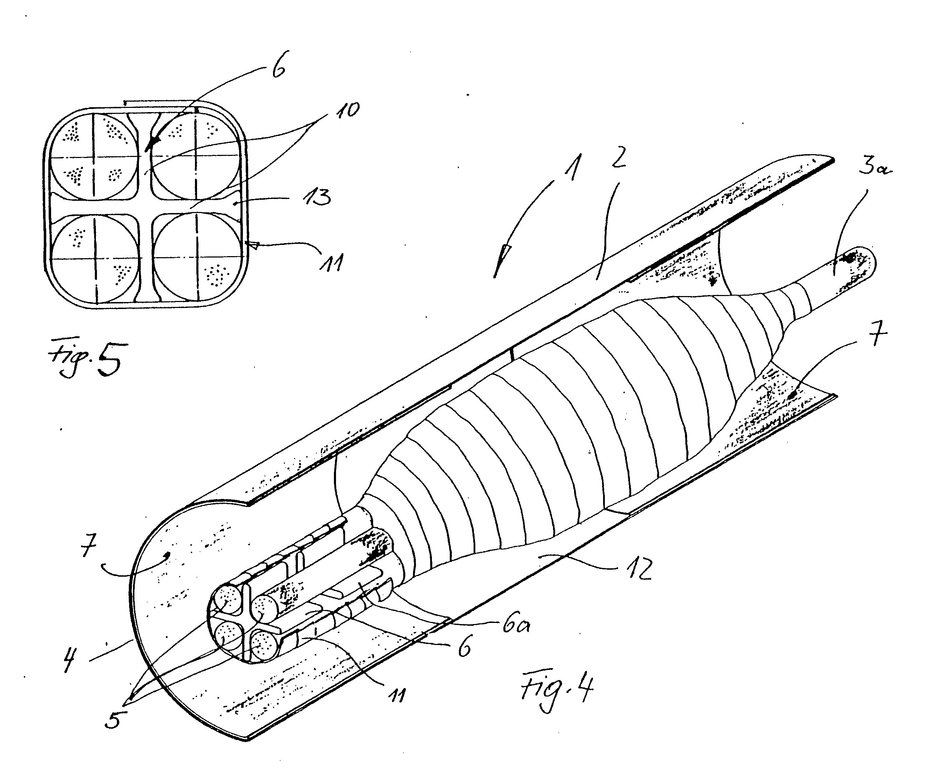

Der eingebaute Zustand ist in Fig. 3 wiedergegeben, d. h. durch die besondere Gestaltung der Formstücke 6 bzw. 6a sind alle mit 8 bezeichneten Hohlräume zwischen den Kabeln mit Heißschmelzkleber ausgefüllt, so daß die Stirnseite 4 dicht gegenüber dem Inneren der Muffe 1 abgedichtet ist.

Die Montage einer Muffe 1 nach der Erfindung ist im wesentlichen die folgende :

Zunächst wird ein in Fig. 3 mit 9 bezeichnetes Kabel entsprechend abgesetzt, die Kabeladern werden mit den ebenfalls abgesetzten Kabeladern der Kabel 5 in üblicher Weise verbunden oder es werden andere Manipulationen an den Kabelenden vorgenommen. Die Verbindungsstelle wird mit einem schrumpffähigen Hüllschlauch 2 umgeben, der auf seiner Innenseite mit einer Heißschmelzkleberbeschichtung 7, wenigstens in den Bereichen seiner Ränder 3 und 4, ausgerüstet ist. Um die Kabel 5 sowohl bei der Montage als auch später in der Muffe auf Abstand zu halten, wird zwischen die Innenräume das Formstück 6 mit seinem kreuzförmigen Querschnitt eingeschoben. Ist dies geschehen, wird durch kurzes Aufschrumpfen des Schlauches 2 in diesem Berei-

chen das Formstück 6 an Ort und Stelle gehalten. Weiterer Hilfsmittel bedarf es dazu nicht. Zweckmäßig sind daher die mit 10 bezeichneten Stege des Formstückes 6 von einer solchen Länge, daß sie durch geringfügiges Aufschrumpfen des Hüllschlauches an ihren Oberkanten erfaßt werden können.

Nachfolgend wird nun von von der Mitte der Muffe her weitere Wärme aufgebracht, wobei die Schmelztemperatur der Heißschmelzkleberbeschichtung 7 überschritten wird. Der Heißschmelzkleber der Beschichtung 7 tritt dabei in die Hohlräume zwischen den Kabelenden 5 ein und wird durch die von innen nach außen erfolgende Schrumpfbewegung in Richtung der Stirnseiten 4 bzw. 3 der Muffe 1 gepreßt.

Durch das Formstück 6 wird die größte Menge des Heißschmelzklebers zunächst am Austritt aus dem Muffenende gehindert und dadurch besonders gut in die Hohlräume eingepreßt. Durch eine weitere Wärmeaufbringung und damit durch die Wärme des Heißschmelzklebers 7 selbst wird nach und nach von innen nach außen das Formstück 6 ebenfalls geschmolzen, so daß die Stirnseiten vollständig mit Heißschmelzkleber ausgefüllt werden, was in Fig. 3 mit bezeichnet ist.

In den Fig. 4 und 5 ist ein abgewandeltes Ausführungsbeispiel dargestellt. Soweit wie möglich sind in den Figuren die gleichen Bezugszeichen wie bei den Fig. 1-3 eingesetzt worden.

Eine in Fig. 4 allgemein mit 1 bezeichnete Kabelmuffe wird von einem Hüllschlauch 2 aus schrumpffähigem Material gebildet. An einem Ende verläßt die Kabelmuffe 1 ein Einzelkabel 3a.

In das dem Einzelkabel 3a entgegengesetzte Ende 4 der Kabelmuffe 1 sind im dargestellten Beispiel vier Kabelenden 5 eingeführt, die im Inneren verspleißt sind. Zwischen diesen vier Kabelenden 5 sind im dargestellten Beispiel zwei Formstücke 6 und 6a mit kreuzförmigen Querschnitt aus Heißschmelzkleber eingelegt. In diesem Bereich sind die Kabelenden 5 mit einem Band 11, ebenfalls aus heißschmelzendem Material umwickelt.

Der Hüllschlauch 2 weist randseitig Heißschmelzkleberbeschichtungen 7 auf, d. h. ein Mittelbereich 12 ist von dieser Heißschmelzkleberbeschichtung freigehalten.

Die Schmelzeigenschaften sind dabei so getroffen, daß das Band 11 einen niedrigeren Erweichungspunkt aufweist als die Formstücke 6 bzw. 6a und auch die Heißschmelzkleberbeschichtung 7.

Aus Fig. 5 ist erkennbar, daß die freien Enden der Stege 10 der Formstücke 6 bzw. 6a nach außen sich erweiternd ausgebildet sind. Dieser Bereich ist mit dem Bezugszeichen 13 versehen und bildet eine Auflagefläche für das Band 11 aus heißschmelzklebendem Material.

Bei der Montage wird nach Einlegen der Formstücke 6 und 6a das Band 11 aufgewickelt und geringfügig erwärmt, derart, daß es leicht teigig wird und von Hand sowohl an die Mäntel der Kabelenden 5 als auch an die Formstücke 6 und 6a, insbesondere deren freien Enden 13, angedrückt werden kann und dort haftet. Anschließend wird der Hüllschlauch 2 in Position gebracht und mit seinem Mittelbereich 12 angeschrumpft, so daß er auf dem Spleiß haftet. Nachfolgend wird die weitere Wärmeaufbringung vorgenommen.

Es können auch andere, geringfügig abweichende Formen der Formstücke 6 verwendet werden, insbesondere wenn andere Anzahlen von Kabelenden 5 eingeführt werden.

## Patentansprüche

1. Kabelmuffe mit einem Hüllschlauch (2) aus wärmeschrumpffähigen Material, dessen Innenfläche in Bereichen, in welchen eine Längsabdichtung der Muffe (1) vorgesehen ist, mit einer durch Wärmewirkung schmelzbaren Beschichtung (7) versehen ist, und mit mindestens einem koaxial im Hüllschlauch (2) in den Bereichen mit der schmelzbaren Beschichtung (7) angeordneten Formstück (6, 6a), welches von einem Mittelteil ausgehende und sich radial etwa bis zum Außenumfang eines in die Muffe (1) einführbaren Kabelendenbündels erstreckende Stege (10) aufweist, welche benachbarte Kabelenden voneinander trennen, d. h., des Formstück (6, 6a) hat beispielsweise kreuzförmigen Querschnitt dadurch gekennzeichnet, daß die durch Wärmewirkung schmelzbare Beschichtung (7) des Hüllschlauches (2) und das Formstück (6, 6a) aus Heißschmelzkleber gebildet sind, wobei der Erweichungspunkt des Heißschmelzklebers des Formstückes (6, 6a) unter demjenigen der Heißschmelzkleberbeschichtung (7) des Hüllschlauches (2) liegt.

2. Kabelmuffe nach Anspruch 1, dadurch gekennzeichnet, daß sie in ihrem Inneren im Abstand vom ersten Formstück (6) wenigstens ein weiteres Formstück (6a) derselben Ausbildung aufweist.

3. Kabelmuffe nach Anspruch 2, dadurch gekennzeichnet, daß der Abstand « y » zwischen den beiden Formstücken (6 bzw. 6a) kleiner als das 1-fache, insbesondere kleiner als das 0,5-fache der Formstücklänge « x » ist.

4. Kabelmuffe nach Anspruch 1 oder einem der folgenden dadurch gekennzeichnet, daß vor Aufschrumpfen des Hüllschlauches (2) und nach Einsetzen wenigstens zweier Formstücke (6, 6a) die Kabelenden (5) mit einem Band aus Heißschmelzkleber umwickelt sind, wobei der Erweichungspunkt dieses Heißschmelzklebers unter demjenigen des Heißschmelzklebers liegt, aus dem die Formstücke (6, 6a) gebildet sind.

5. Kabelmuffe nach Anspruch 4, dadurch gekennzeichnet, daß ein Mittelbereich (12) des Hüllschlauches (2) von einer Heißschmelzkleberbeschichtung (7) freigehalten ist.

6. Kabelmuffe nach einem der Ansprüche 4 oder 5, dadurch gekennzeichnet, daß die Formstücke (6) an ihren freien Enden (13) der Stege (10) zur Bildung einer Auflagefläche für das Kleberband (11) sich erweiternd ausgebildet sind (Fig. 5).

7. Verfahren zur Erzeugung einer Kabelmuffe nach einem der Ansprüche 1-3, dadurch gekennzeichnet, daß zunächst ein Formstück aus Heißschmelzkleber zwischen die einlaufenden Kabel gelegt und ein Hüllschlauch aus wärmeschrumpffähigem Material über den Mittelbereich geschoben wird, nachfolgend zur Lagefixierung des Formstückes der Schlauch bereichsweise gering bei einer Temperatur geschrumpft wird, die unterhalb des Erweichungspunktes der Heißschmelzkleberbeschichtung des Schlauches liegt, derart, daß das Formstück vom geringfügig geschrumpften Schlauch gehalten wird, nachfolgend die Wärme vor der Mitte des Schrumpfschlauches zum Rand hin derart aufgebracht wird, daß neben dem Schrumpfen des Hüllschlauches die Erweichungstemperatur von dessen Heißschmelzkleberbeschichtung überschritten wird, wobei der Heißschmelzkleber die Hohlräume zwischen den Kabeln und dem Hüllschlauch ausfüllt, wobei er durch das Formstück am randseitigen Austritt zwischen den Kabeln hindurch gehindert wird, worauf durch eine weitere Wärmeaufbringung und damit durch die Wärme des Heißschmelzklebers der Hüllschlauchbeschichtung nach und nach von innen nach außen das Formstück ebenfalls geschmolzen wird, so daß die Stirnseiten der Muffe vollständig mit Heißschmelzkleber ausgefüllt sind.

8. Verfahren zur Erzeugung einer Kabelmuffe nach einem der Ansprüche 4-6, dadurch gekennzeichnet, daß nach Einsatz der Formstücke der von diesen definierte Einlaufbereich mit einem Band aus heißschmelzklebendem Material umwickelt, dieses Band kurzfristig geringfügig erwärmt und wenigstens an Teile der Kabeloberflächen und der freien Enden der Formstücke zum dortigen Anhaften angedrückt wird, nachfolgend der Hüllschlauch aufgeschoben und zur weiteren Fixierung in seinem heißschmelzkleberlosen Mittelbereich auf die Außenoberfläche der Kabelmuffe aufgeschrumpft und nachfolgend die weitere Wärmebehandlung vorgenommen wird.

**Claims**

1. Cable sleeve with a sheathing tube (2) of heat-shrinkable material, the inner surface of which, in regions in which a longitudinal sealing of the sleeve (1) is provided, is provided with a coating (7) which is able to be melted by the effect of heat, and with at least one shaped part (6, 6a) arranged coaxially in the sheathing tube (2) in the regions with the meltable coating (7), which shaped part has cross-pieces (10) issuing from a central piece and extending radially approximately up to the outer circumference of a cable end bundle which is able to be introduced into the sleeve (1), which cross-pieces separate adjacent cable ends from each other, i. e. the shaped part (6, 6a) has for example a cruciform cross-section, characterised in that the coating (7), which is able to be melted by the effect of heat, of the sheathing tube (2), and the shaped part (6, 6a) are formed from hot melt adhesive, whereby the softening point of the hot melt adhesive of the shaped part (6, 6a) lies below that of the hot melt adhesive coating (7) of the sheathing tube (2).

2. Cable sleeve according to Claim 1, characterised in that in its interior at a distance from the first shaped part (6) it has at least one further shaped part (6a) of the same construction.

3. Cable sleeve according to Claim 2, characterised in that the distance « y » between the two shaped parts (6 or respectively 6a) is less than 1-times, in particular less than 0.5-times the shaped part length « x ».

4. Cable sleeve according to Claim 1 or one of the following, characterised in that before shrinking on the sheathing tube (2) and after insertion of at least two shaped parts (6, 6a) the cable ends (5) are wrapped around by a band of hot melt adhesive, whereby the softening point of this hot melt adhesive lies below that of the hot melt adhesive from which the shaped parts (6, 6a)·are formed.

5. Cable sleeve according to Claim 4, characterised in that a central region (12) of the sheathing tube (2) is kept free of a hot melt adhesive coating (7).

6. Cable sleeve according to one of Claims 4 or 5, characterised in that the shaped parts (6) at their free ends (13) of the cross-pieces (10) are constructed so as to be widened to form a support surface for the band of adhesive (11) (Fig. 5).

7. Method for the production of a cable sleeve according to one of Claims 1-3, characterised in that firstly a shaped part of hot melt adhesive is placed between the incoming cables and a sheathing tube of heat-shrinkable material is pushed over the central region, then to fix the shaped part in position, the tube is slightly shrunk in areas at a temperature which lies below the softening point of the hot melt adhesive coating of the tube, such that the shaped part is held by the slightly shrunken tube, then the heat in front of the centre of the shrinkage tube is applied toward the edge such that alongside the shrinkage of the sheathing tube, the softening temperature of its hot melt adhesive coating is exceeded, whereby the hot melt adhesive fills up the cavities between the cables and the sheathing tube, whereby it is prevented by the shaped part from emerging on the edge side through between the cables, after which, through a further application of heat and hence through the heat of the hot melt adhesive of the sheathing tube coating, the shaped part is likewise gradually melted from the inside outwards, so that the end faces of the sleeve are completely filled with hot melt adhesive.

8. Method for the production of a cable sleeve according to one of Claims 4-6, characterised in that after insertion of the shaped parts the run-in region defined thereby is wound around by a band of hot melt adhesive material, this band is heated slightly for a short period of time and is pressed at least against parts of the cable surfaces and of the free ends of the shaped parts for adherence there, then the sheathing tube is pushed on and for further fixing is shrunk in its central region, which is without hot melt adhesive, onto the outer surface of the cable sleeve, and then the further heat treatment is carried out.

## Revendications

1. Manchon de câbles comprenant un flexible d'enveloppement (2) en un matériau thermorétractable, dont la face interne est munie d'un revêtement (7) propre à fondre sous l'action de la chaleur dans des régions dans lesquelles il est prévu un étanchement longitudinal du manchon (1) ; et au moins une pièce moulée (6, 6a) disposée coaxialement dans le flexible d'enveloppement (2), dans les régions munies du revêtement fusible (7), et présentant des nervures (10) qui partent d'une partie centrale, s'étendent, dans le sens radial, à peu près jusqu'au pourtour externe d'un faisceau d'extrémités de câbles insérable dans le manchon (1), et séparent les unes des autres des extrémités de câbles voisines, c'est-à-dire que la pièce moulée (6, 6a) possède par exemple une section cruciforme, caractérisé par le fait que la pièce moulée (6, 6a) et le revêtement (7) du flexible d'enveloppement (2), propre à fondre sous l'action de la chaleur, sont formés d'un adhésif thermofusible, le point de ramollissement de l'adhésif thermofusible de la pièce moulée (6, 6a) se situant en deçà de celui du revêtement (7) en adhésif thermofusible du flexible d'enveloppement (2).

2. Manchon de câbles selon la revendication 1, caractérisé par le fait qu'il présente dans son espace interne, à distance de la première pièce moulée (6), au moins une autre pièce moulée (6a) de même réalisation.

3. Manchon de câbles selon la revendication 2, caractérisé par le fait que la distance « y » entre les deux pièces moulées (6, respectivement 6a) est inférieure à 1 fois, notamment inférieure à 0,5 fois la longueur « x » de ces pièces moulées.

4. Manchon de câbles selon la revendication 1 ou l'une des suivantes, caractérisé par le fait que, avant l'emmanchement à chaud du flexible d'enveloppement (2) et après l'introduction d'au moins deux pièces moulées (6, 6a), les extrémités (5) des câbles sont emmaillotées par un ruban d'adhésif thermofusible, le point de ramollissement de cet adhésif thermofusible se situant en deçà de celui de l'adhésif thermofusible dont les pièces moulées (6, 6a) sont constituées.

5. Manchon de câbles selon la revendication 4, caractérisé par le fait qu'une région centrale (12) du flexible d'enveloppement (2) est maintenue dépourvue d'un revêtement (7) en adhésif thermofusible.

6. Manchon de câbles selon l'une des revendications 4 ou 5, caractérisé par le fait que les pièces moulées (6) sont réalisées, aux extrémités libres (13) de leurs nervures (10), munies d'un évasement pour former une surface d'appui destinée au ruban d'adhésif (11) (figure 5).

7. Procédé pour produire un manchon de câbles selon l'une des revendications 1-3, caractérisé par le fait qu'une pièce moulée en adhésif thermofusible est tout d'abord placée entre les câbles engagés, et un flexible d'enveloppement en un matériau thermorétractable est enfilé sur la région centrale, après quoi, pour verrouiller à demeure la pièce moulée, le flexible est légèrement fretté, par zones, à une température située en deçà du point de ramollissement du revêtement en adhésif thermofusible de ce flexible, de telle sorte que la pièce moulée soit retenue par le flexible légèrement fretté, ensuite de quoi l'on fait agir la chaleur en direction du bord, à partir du centre du flexible rétractable, de façon que, en plus du retrait du flexible d'enveloppement, la température de ramollissement de son revêtement en adhésif thermofusible soit dépassée, l'adhésif thermofusible comblant alors les cavités entre les câbles et le flexible d'enveloppement en étant empêché, par la pièce moulée, de sortir marginalement entre les câbles, après quoi, par un nouvel apport de chaleur et, par conséquent, du fait de la chaleur de l'adhésif thermofusible du revêtement du flexible d'enveloppement, la pièce moulée est elle aussi progressivement fondue de l'intérieur vers l'extérieur, si bien que les faces frontales du manchon sont intégralement comblées par de l'adhésif thermofusible.

8. Procédé pour produire un manchon de câbles selon l'une des revendications 4-6, caractérisé par le fait que, après l'introduction des pièces moulées, la zone de pénétration délimitée par ces dernières est emmaillotée par un ruban en un matériau adhésif thermofusible, ce ruban est légèrement chauffé un court instant, puis pressé au moins sur des parties des surfaces des câbles et des extrémités libres des pièces moulées, en vue d'y adhérer, après quoi le flexible d'enveloppement est enfilé et fretté sur la surface externe du manchon de câbles, dans sa région centrale dépourvue d'adhésif thermofusible, en vue de la poursuite du verrouillage à demeure, ensuite de quoi l'on procède au traitement thermique ultérieur.

FIG.1

FIG.3

FIG.2

2

Fig.4

Fig.5

3